# EUROPÄISCHE PATENTSCHRIFT

(11) **EP 1 260 159 B1**
(45) Veröffentlichungstag und Bekanntmachung des Hinweises auf die Patenterteilung: **13.04.2005**
(21) Anmeldenummer: 02010376.8
(22) Anmeldetag: 08.05.2002
(51) Int. Cl.: A47B 88/04

(54) **Dämpfer, insbesondere für Möbel**
Damper, especially for furniture
Amortisseur, en particulier pour mobilier

(30) Priorität: 17.05.2001 AT 7842001; 26.11.2001 AT 18472001
(43) Veröffentlichungstag der Anmeldung: 27.11.2002
(73) Patentinhaber: Julius Blum GmbH, 6973 Höchst (AT)
(72) Erfinder: Dubach, Fredi, 8344 Bäretwill (CH)
(74) Vertreter: Torggler, Paul Norbert, Dr.

(56) Entgegenhaltungen:
- DE-A- 2 238 595
- GB-A- 1 269 055
- GB-A- 1 467 043
- GB-A- 1 543 712
- US-A- 4 838 393
- US-A- 5 157 806
- US-A- 5 257 680
- US-A- 5 720 369
- US-A- 6 006 873

## Beschreibung

Die Erfindung bezieht sich auf einen Dämpfer, insbesondere für Möbel, mit einem in einer Zylinderkammer eines Zylinders linear verschiebbaren Kolben, der mit einem elastisch verformbaren Kolbenteil versehen ist, der beim Dämpfvorgang an die Zylinderwand gedrückt wird.

Aus der US 5,257,680 ist eine Dämpfvorrichtung für Fahrzeuge und Maschinen bekannt geworden, die in Fig. 7 die Anordnung eines elastomeren Materials an der Innenseite eines Zylinders zeigt. Bei einer Kolbenbewegung werden Scheiben zusammengepresst, die wiederum das Elastomer an die Zylinderwand drücken und durch Reibung eine Dämpfung an der Zylinderwand erfolgt.

Aufgabe der Erfindung ist es, einen Dämpfer, der insbesondere zum Dämpfen der Bewegung von Möbelteilen geeignet ist, derart auszubilden, daß die Dämpfwirkung bezogen auf den Kolbenweg sehr schnell auf ihren maximalen Wert ansteigt.

Die erfindungsgemäße Aufgabe wird dadurch gelöst, daß der elastisch verformbare Kolbenteil an einer am Kolben ausgebildeten Kolbenstange ausgebildet ist, die in einem Kanal des Zylinders geführt ist, der einen geringeren Durchmesser aufweist als der Kolben, wobei sich der elastisch verformbare Kolbenteil unter axialer Druckbelastung radial ausweitet und an der Wand des Kanals anliegt.

Vorteilhaft ist vorgesehen, daß sich im Zylinder zwischen den Kolben und dem elastisch verformbaren Kolbenteil beim Dämpfungsvorgang ein Unterdruck bildet.

Damit der Kolben nicht stehen bleibt, wenn der Unterdruck und die Reibung einerseits und die Gegenkraft an der Druckseite des Kolbens gleich groß sind, ist in einem Ausführungsbeispiel der Erfindung der Kolben mit mindestens einer Düse versehen.

In einem weiteren Ausführungsbeispiel der Erfindung ist in der Zylinderwand eine axiale Vertiefung vorgesehen, die, wenn der Kolben sich im Bereich der Vertiefung befindet, einen Überlauf von einer vorderen Teilkammer zu einer hinteren Teilkammer bildet. Weiters wäre es möglich, den Kolben mit einem gewissen Spiel in der Zylinderkammer zu führen, sodaß ein ständiger Überlauf von einer Teilkammer zur anderen gewährleistet wird. Das Spiel muß natürlich so gering sein, daß die Bildung eines Unterdrucks nicht verhindert wird.

Nachfolgend werden verschiedene Ausführungsbeispiele der Erfindung an Hand der Figuren der beiliegenden Zeichnungen beschrieben. Es zeigen:
- Die Fig. 1: einen Längsschnitt durch einen erfindungsgemäßen Dämpfer, wobei der Kolben in der Ausgangs- bzw. Bereitschaftsstellung gezeigt ist,
- die Fig. 2: einen Längsschnitt durch einen erfindungsgemäßen Dämpfer, wobei der Kolben in der Dämpfstellung gezeigt ist,
- die Fig. 3: einen Längsschnitt durch einen erfindungsgemäßen Dämpfer, wobei der Kolben in der Endstellung gezeigt ist,
- die Fig. 4: einen Längsschnitt durch ein weiteres Ausführungsbeispiel eines erfindungsgemäßen Dämpfers, wobei der Kolben in der Bereitschafts- bzw. Ausgangsstellung gezeigt ist,
- die Fig. 5: einen Längsschnitt durch ein weiteres Ausführungsbeispiel eines erfindungsgemäßen Dämpfers in der Bereitschaftsstellung,
- die Fig. 6: den Ausschnitt A der Fig. 5,
- die Fig. 7: schaubildlich und teilweise geschnitten den Kolben des Dämpfers,
- die Fig. 8: einen Längsschnitt durch einen Dämpfer gemäß der Fig. 5 am Beginn der Dämpfungsbewegung,
- die Fig. 9: den Ausschnitt A der Fig. 8,
- die Fig. 10: einen Schnitt nach der Linie I-I der Fig. 8,
- die Fig. 11: einen Längsschnitt durch ein weiteres Ausführungsbeispiel eines Dämpfers in der Bereitschaftsstellung,
- die Fig. 12: einen Längsschnitt durch ein weiteres Ausführungsbeispiel eines Dämpfers in der Bereitschaftsstellung,
- die Fig. 13: einen Längsschnitt durch einen erfindungsgemäßen Dämpfer, wobei der Kolben in der Dämpfstellung gezeigt ist,
- die Fig. 14: den Ausschnitt A der Fig. 12,
- die Fig. 15: den Ausschnitt B der Fig. 13,
- die Fig. 16: einen Längsschnitt durch ein weiteres Ausführungsbeispiel eines Dämpfers in der Bereitschaftsstellung,
- die Fig. 17: einen Längsschnitt durch einen erfindungsgemäßen Dämpfer, wobei der Kolben in der Dämpfstellung gezeigt ist,
- die Fig. 18: den Ausschnitt A der Fig. 16,
- die Fig. 19: den Ausschnitt B der Fig. 17,
- die Fig. 20: einen Längsschnitt durch ein weiteres Ausführungsbeispiel eines Dämpfers in der Bereitschaftsstellung,
- die Fig. 21: einen Längsschnitt durch einen erfindungsgemäßen Dämpfer, wobei der Kolben in der Dämpfstellung gezeigt ist,
- die Fig. 22: den Ausschnitt A der Fig. 20,
- die Fig. 23: den Ausschnitt B der Fig. 21,
- die Fig. 24: einen Schnitt nach der Linie C-C der Fig. 20,
- die Fig. 25: einen Längsschnitt durch ein weiteres Ausführungsbeispiel eines Dämpfers in der Bereitschaftsstellung,
- die Fig. 26: einen Längsschnitt durch einen erfindungsgemäßen Dämpfer, wobei der Kolben in der Dämpfstellung gezeigt ist,
- die Fig. 27: den Ausschnitt A der Fig. 25,
- die Fig. 28: den Ausschnitt B der Fig. 26,
- die Fig. 29: einen Schnitt nach der Linie C-C der Fig. 25,
- die Fig. 30: einen Längsschnitt durch ein weiteres Ausführungsbeispiel eines Dämpfers in der Bereitschaftsstellung,
- die Fig. 31: einen Längsschnitt durch einen Dämpfer gemäß der Fig. 30, wobei der Kolben in der Dämpfstellung gezeigt ist,
- die Fig. 32: den Ausschnitt A der Fig. 30 und
- die Fig. 33: den Ausschnitt B der Fig. 31.

Der erfindungsgemäße Dämpfer weist einen Zylinder 1 mit einer Zylinderkammer 2 auf, in der ein Kolben 3 linear verfahrbar ist. Der Kolben 3 teilt die Zylinderkammer 2 in eine hintere Teilkammer 2' und eine vordere Teilkammer 2".

Am Kolben 3 ist eine Kolbenstange 4 ausgebildet, die durch einen Kanal 5 des Zylinders 1 ragt und die Teil des Kolbens 3 ist. Die Kolbenstange 4 ist im Kanal 5 mit Spiel aufgenommen, sodaß die Kolbenstange 4 und die Wand 9 des Kanals 5 in der Ruhestellung des Kolbens 3 einen Ringspalt 10 abgrenzt.

Der Kolben 3 ist in der Zylinderkammer 2 dichtend geführt.

Die Kolbenstange 4 besteht aus zwei starren Abschnitten 7, 8, zwischen denen ein elastisch verformbarer Kolbenteil 6 angeordnet ist. Der Kolbenteil 6 ist als Vollkörper aus gummielastischem Material ausgebildet.

An ihrem freien Ende ist die Kolbenstange 4 mit einem Puffer 11 aus elastischem Material versehen und weiters mit einer Abdeckkappe 12, die zwei Luftdurchlässe 13 aufweist. Die Abdeckkappe 12 ist in einem Ringspalt 14 des Zylinders 1 geführt und innerhalb der Abdeckkappe 12 ist eine Druckfeder 15 angeordnet, die den Kolben 3 über die Kolbenstange 4 in die Ausgangsstellung bewegt. Der Zylinder 1 weist eine stirnseitige Luftdurchtrittsöffnung 17 auf, über die Luft in die Teilkammer 2" einströmen und aus der Teilkammer 2" ausströmen kann.

Beim Dämpfen trifft der Möbelteil, beispielsweise eine Türe oder eine Schublade, auf den Puffer 11 der Kolbenstange 4 auf und drückt diese zusammen mit dem Kolben 3 nach rechts (mit Bezug auf die Figuren der Zeichnung). Sobald sich der Kolben 3 bewegt, entsteht hinter dem Kolben 3 in der hinteren Teilkammer 2' der Zylinderkammer 2 ein Unterdruck auf, wobei allerdings Luft durch die Durchtrittsöffnungen 13 und den Ringspalt 10 zwischen der Kolbenstange 4 und der Wand 9 des Kanals 5 in die Teilkammer 2' nachströmt. Dadurch, daß der Ringspalt 10 sehr eng gehalten ist, ist die Luftzufuhr sehr gering.

Bei langsamer Kolbenbewegung strömt ausreichend Luft nach und der Kolben 3 bewegt sich ungebremst weiter.

Bei schnellerer Kolbenbewegung strömt zuwenig Luft durch den Ringspalt 10 in die Teilkammer 2' und hinter dem Kolben 3 entsteht ein Unterdruck. Dieser Unterdruck erzeugt eine Kraft F1, welche der Kolbenbewegung entgegensteht.

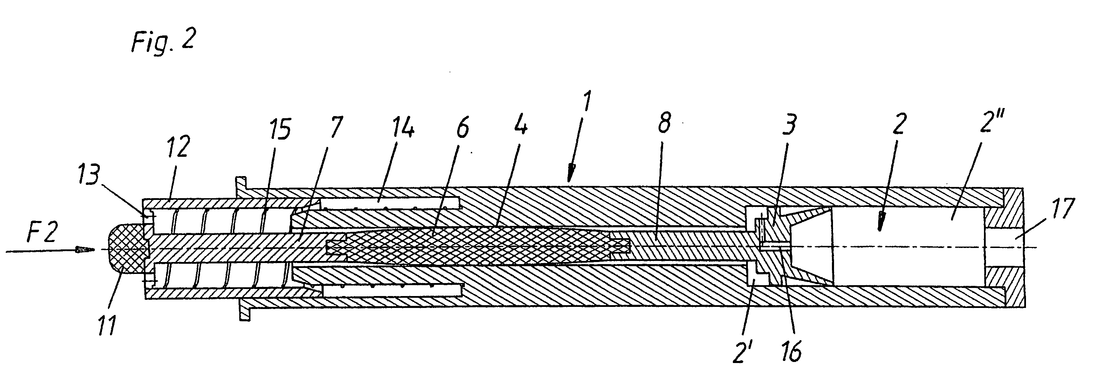

Dies bewirkt, daß der elastisch verformbare Kolbenteil 6 in der Kolbenstange 4 gestaucht wird, wobei sich dieser Kolbenteil 6, wie in der Fig. 2 gezeigt, radial ausdehnt und an die Wand 9 des Kanals 5 gedrückt wird. Dadurch wird der Ringspalt 10 geschlossen und die weitere Bewegung des Kolbens 3 wird sowohl durch den Unterdruck in der Teilkammer 2' als auch durch die Reibung zwischen dem mittleren Kolbenteil 6 und der Wand 9 abgebremst.

Wenn auf den Kolben 3 weiterhin eine Kraft in der Richtung des Pfeiles F2 der Fig. 2 einwirkt, kann der Kolben 3 stehen bleiben, wenn durch den Unterdruck und die Reibung eine gleich große Gegenkraft F1 aufgebaut wurde.

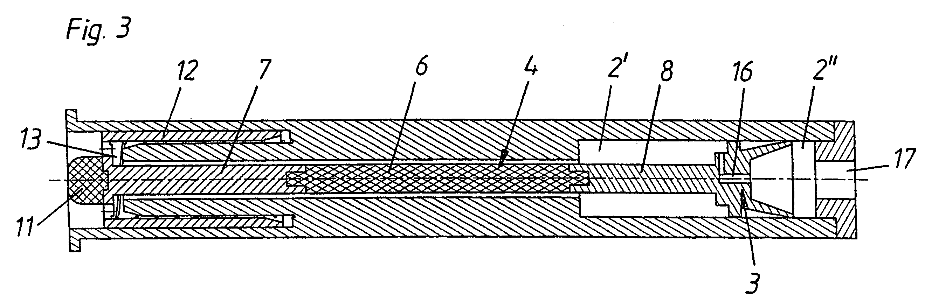

Um zu verhindern, daß der Kolben 3 in der Mitte der Zylinderkammer 2 stecken bleibt, ist im Kolben 3 eine Düse 16 vorgesehen, durch den Luft zum Abbau des Unterdrucks in der Teilkammer 2' einströmen kann. Dadurch kann sich der Kolben 3 weiterbewegen und bis in die in der Fig. 3 gezeigte Endstellung gedrückt werden.

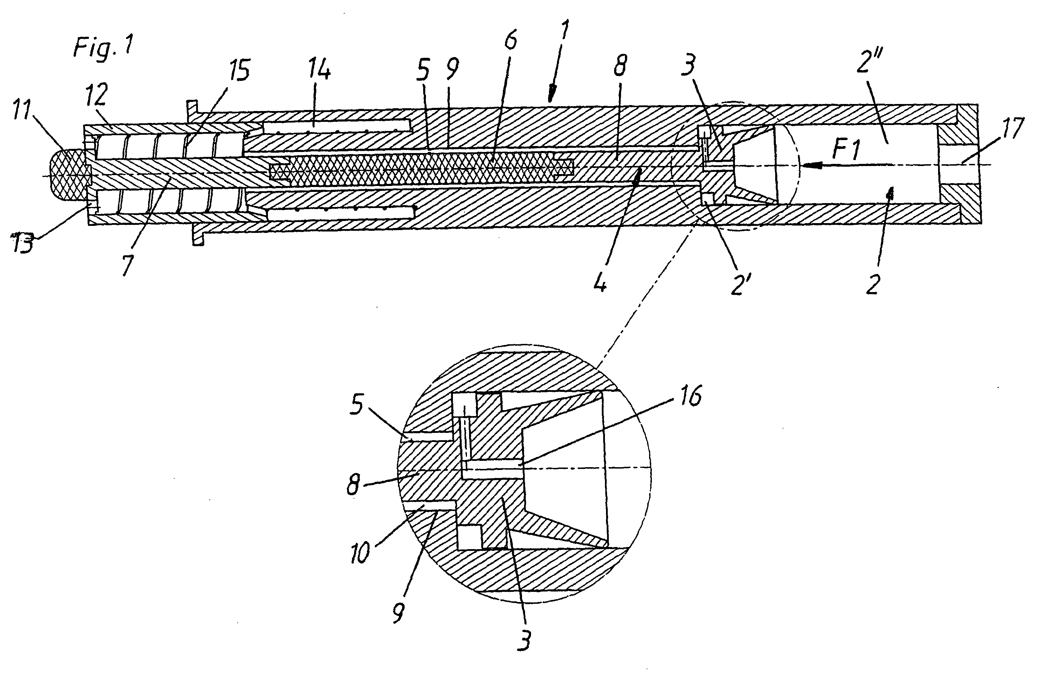

Bei erfolgter Entlastung, beispielsweise wenn die Möbeltüre oder die Schublade geöffnet wird, drückt die Feder 15 den Kolben 3 über die Kolbenstange 4 wieder in die in der Fig. 1 gezeigte Bereitschaftsstellung.

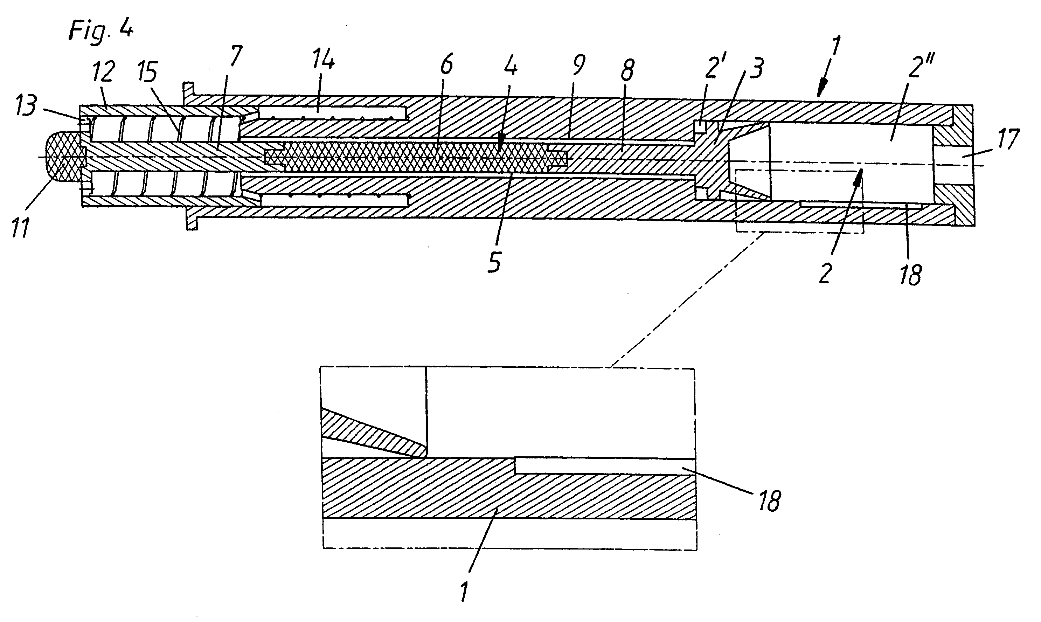

Als Variante zum Kanal 16 kann, wie in der Fig. 4 gezeigt, in der Zylinderwand eine Vertiefung 18 vorgesehen sein, die die beiden Teilkammern 2' und 2" verbindet, wobei durch verschiedene Querschnitte der Vertiefung 18 der Abbau des Unterdrucks wegabhängig vom Kolben 3 gesteuert werden kann.

Beim erfindungsgemäßen Dämpfer wird bei der Verdoppelung des Volumens der Teilkammer 2' der Luftdruck um den Faktor 0,5 verringert. Dafür wird nur ein sehr geringer Kolbenweg benötigt und die Bremswirkung des Dämpfers setzt sehr schnell ein und steigt sehr schnell auf den maximalen Wert an. Die maximale Bremskraft ist jedoch durch den in der Teilkammer 2' möglichen Unterdruck begrenzt. Die Teilkammer 2" ist beim Dämpfungsvorgang neutral.

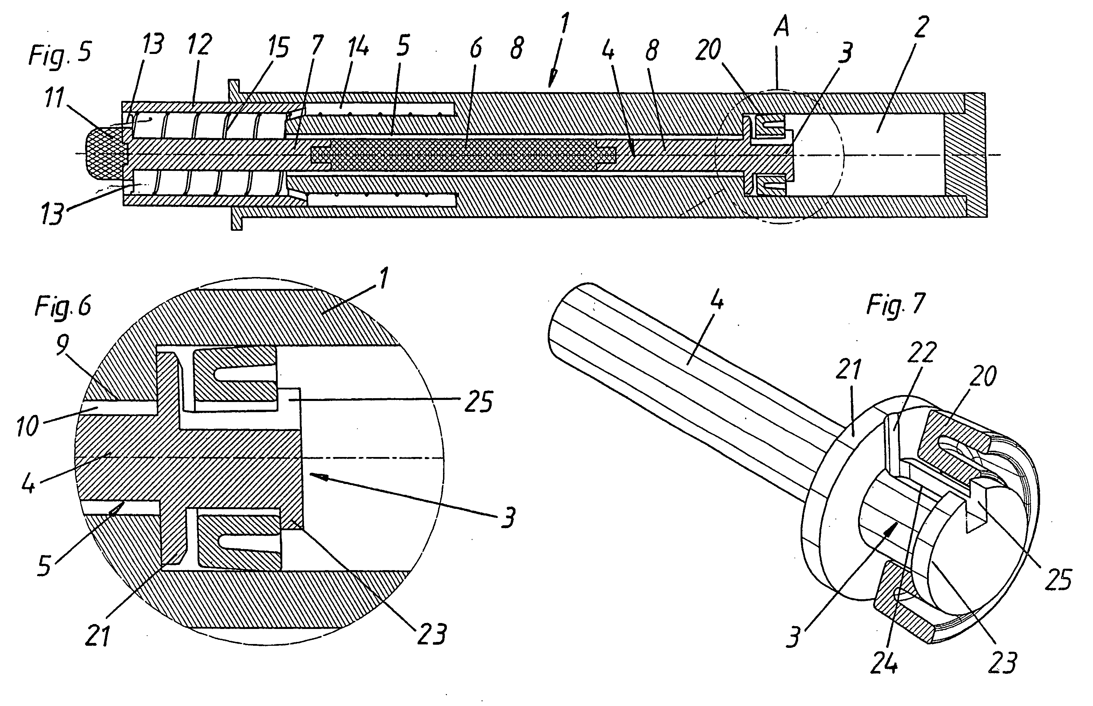

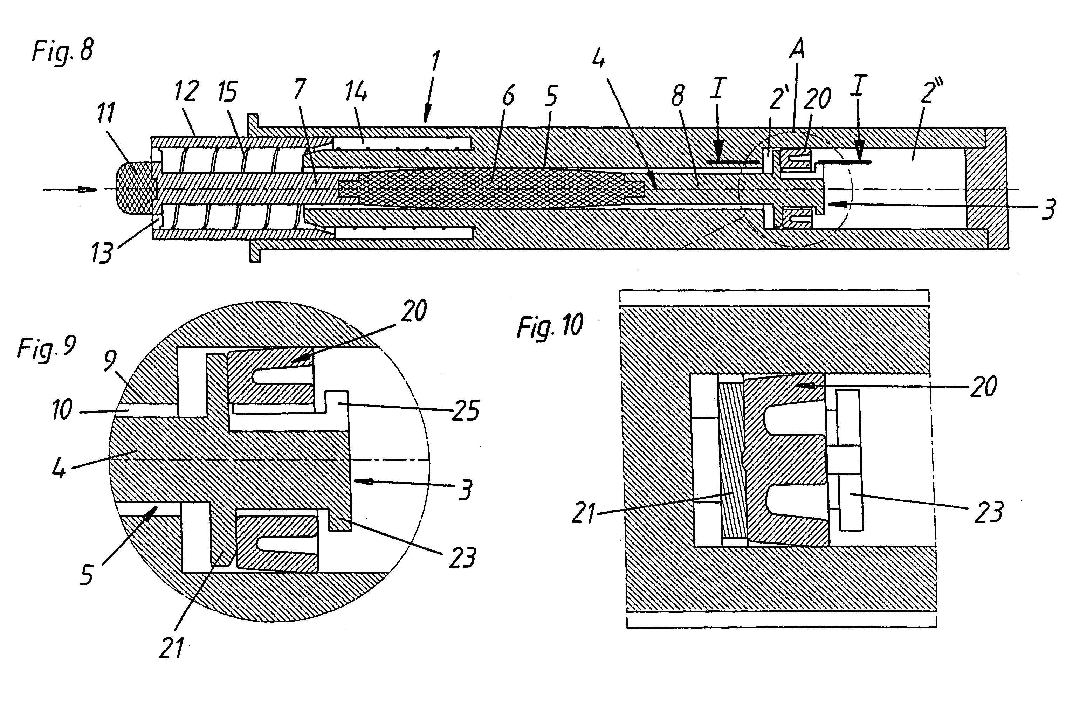

Im den Ausführungsbeispiel nach den Fig. 5 bis 10 teilt der Kolben 3 die Zylinderkammer 2 in eine hintere Unterdruckkammer 2' und eine vordere Druckkammer 2".

Am Kolben 3 ist wiederum eine Kolbenstange 4 ausgebildet, die durch einen Kanal 5 des Zylinders 1 ragt und die Teil des Kolbens 3 ist. Die Kolbenstange 4 ist im Kanal 5 mit Spiel aufgenommen, sodaß die Kolbenstange 4 und die Wand 9 des Kanals 5 in der Ruhestellung des Kolbens 3 einen Ringspalt 10 abgrenzt.

Der Kolben 3 ist in der Zylinderkammer 2 dichtend geführt.

Die Kolbenstange 4 besteht wie im zuvor beschriebenen Ausführungsbeispiel aus zwei starren Abschnitten 7, 8, zwischen denen ein elastisch verformbarer Kolbenteil 6 angeordnet ist. Der Kolbenteil 6 ist als Vollkörper aus gummielastischem Material ausgebildet.

Beim Dämpfen trifft der Möbelteil, beispielsweise eine Türe oder eine Schublade, auf den Puffer 11 der Kolbenstange 4 auf und drückt diese zusammen mit dem Kolben 3 nach rechts (mit Bezug auf die Figuren der Zeichnung). Sobald sich der Kolben 3 bewegt, entsteht hinter dem Kolben 3 in der hinteren Unterdruckkammer 2' der Zylinderkammer 2 ein Unterdruck, wobei allerdings Luft durch die Durchtrittsöffnungen 13 und den Ringspalt 10 zwischen der Kolbenstange 4 und der Wand 9 des Kanals 5 in die Unterdruckkammer 2' nachströmt. Dadurch, daß dieser Ringspalt 10 sehr eng gehalten ist, ist die Luftzufuhr sehr gering.

Während dieser Kolbenbewegung liegt der Dichtring 20 dichtend an der Scheibe 21 an und schließt die Nut 22, die Teil des Überströmkanals bildet. Die Druckkammer 2" und die Unterdruckkammer 2' sind daher getrennt. Der Dichtring 20 ist in der Art eines Kolbendichtringes ausgebildet.

Bei schnellerer Kolbenbewegung strömt so wenig Luft durch den Ringspalt 10 in die Unterdruckkammer 2', daß hinter dem Kolben 3 ein Unterdruck entsteht. Dieser Unterdruck erzeugt eine Kraft, welche der Kolbenbewegung entgegensteht. Dieser Unterdruck entsteht sehr schnell, kann jedoch maximal 1 bar erreichen (auch das nur rein theoretisch). Er sorgt jedoch für eine plötzliche, effektvolle Abbremsung des Möbelteils.

Der Unterdruck bewirkt weiters, daß der elastisch verformbare Kolbenteil 6 der Kolbenstange 4 gestaucht wird, wobei sich dieser Kolbenteil 6 radial ausdehnt und an die Wand 9 des Kanals 5 gedrückt wird. Dadurch wird der Ringspalt 10 geschlossen und die weitere Bewegung des Kolbens 3 wird sowohl durch den Unterdruck in der Unterdruckkammer 2' als auch durch die Reibung zwischen dem mittleren Kolbenteil 6 und der Wand 9 abgebremst.

Gleichzeitig wird in der Druckkammer 2" ein Druck aufgebaut. Dies erfolgt langsamer als der Aufbau des Unterdruckes in der Unterdruckkammer 2', die erreichbaren Kräfte sind jedoch größer.

Wird der Kolben 3 langsam weiterbewegt, wird der Dichtring 20 geringfügig von der Scheibe 21 abgehoben und ermöglicht den langsamen Austritt von Luft aus der Druckkammer 2". Bei erfolgter Entlastung, beispielsweise wenn die Möbeltüre oder die Schublade geöffnet wird, drückt die Feder 15 den Kolben 3 über die Kolbenstange 4 wieder in die in der Fig. 5 gezeigte Bereitschaftsstellung. Dabei wird der Dichtring 20 deutlich von der Nut 22 abgehoben, sodaß Luft über die Nut 22 in der Scheibe 21 und die Nut 24 im Kolben 3 und schließlich über den Schlitz 25 in der Scheibe 23 in den Zylinderraum 2' eindringen kann.

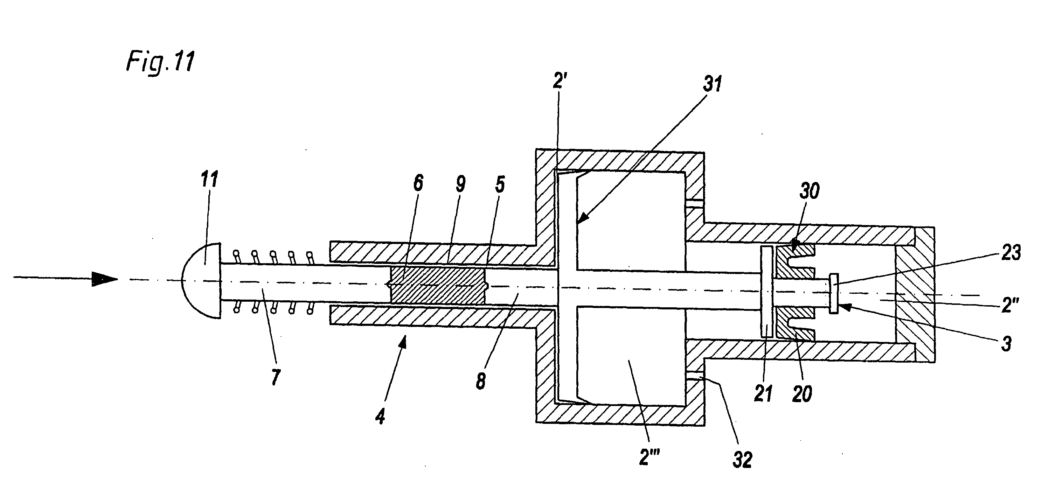

Im Ausführungsbeispiel nach der Fig. 11 haben der Kolben 30 der Druckkammer 2" und der Kolben 31 der Unterdruckkammer 2' unterschiedlichen Durchmesser. Die Druckkammer 2" ist in einem abgesetzten Zylinderabschnitt angeordnet.

Zwischen der Unterdruckkammer 2' und der Druckkammer 2" befindet sich eine neutrale Kammer 2''', die über Öffnungen 32 mit der Außenluft verbunden ist.

Bei der Dämpfung, d.h. bei der Bewegung des Kolbens 30, 31 nach rechts wird wiederum in der Unterdruckkammer 2' der Unterdruck aufgebaut und der Kolbenteil 6 an die Wand 9 des Kanals 5 gedrückt, sodaß einerseits die Unterdruckkammer 2' abgedichtet wird und andererseits zusätzlich zum Unterdruck eine Dämpfung durch Reibung zwischen dem Kolbenteil 6 und der Wand 9 des Kanals 5 erreicht wird.

Der Überlauf beim Kolben 30 ist derselbe wie beim Kolben 3 im zuvor beschriebenen Ausführungsbeispiel.

Beim erfindungsgemäßen Dämpfer wird bei der Verdoppelung des Volumens der Unterdruckkammer 2' der Luftdruck um den Faktor 0,5 verringert. Dafür wird nur ein sehr geringer Kolbenweg benötigt und die Bremswirkung des Dämpfers setzt sehr schnell ein und steigt sehr schnell an.

Durch die Kombination der Unterdruckkammer 2' und der Druckkammer 2" wird ein sehr schnelles Einsetzen der Dämpfung und ein guter Dämpfungsverlauf erreicht.

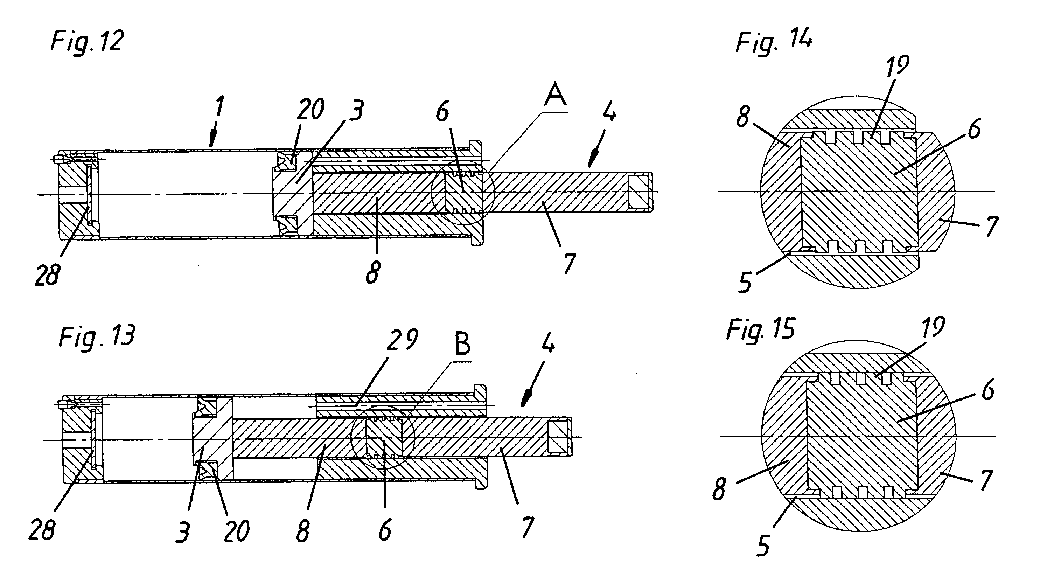

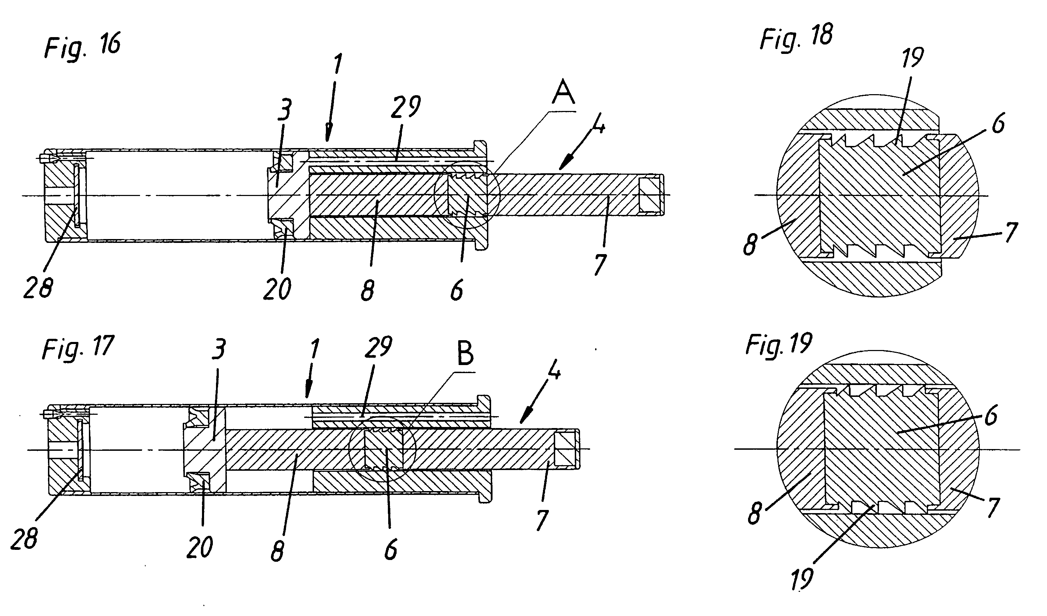

Um beim Dämpfungsvorgang eine bessere Haftung des elastisch verformbaren Kolbenteils 6 an der Wand 9 des Kanals 5 zu erreichen, kann der elastisch verformbare Kolbenteil 6 an seinem Mantel mit einer unebenen Oberfläche versehen sein. Vorzugsweise ist der elastisch verformbare Kolbenteil 6 an seinem Mantel mit Rippen 19 versehen, die in den Ausführungsbeispielen nach den Fig. 12 bis 19 ringförmig verlaufen. Die Rippen 19 können sowohl rechteckigen Querschnitt haben, wie im Ausführungsbeispiel nach den Fig. 12 bis 15 gezeigt, als auch dreieckigen Querschnitt gemäß dem Ausführungsbeispiel der Fig. 16 bis 19. Beim Dämpfen werden die starren Abschnitte 7, 8 der Kolbenstange 4 wie bei den zuvor beschriebenen Ausführungsbeispielen zusammengepreßt und die Rippen 19 des elastisch verformbaren Kolbenteils 6 an die Wand 9 des Kanals 5 gedrückt.

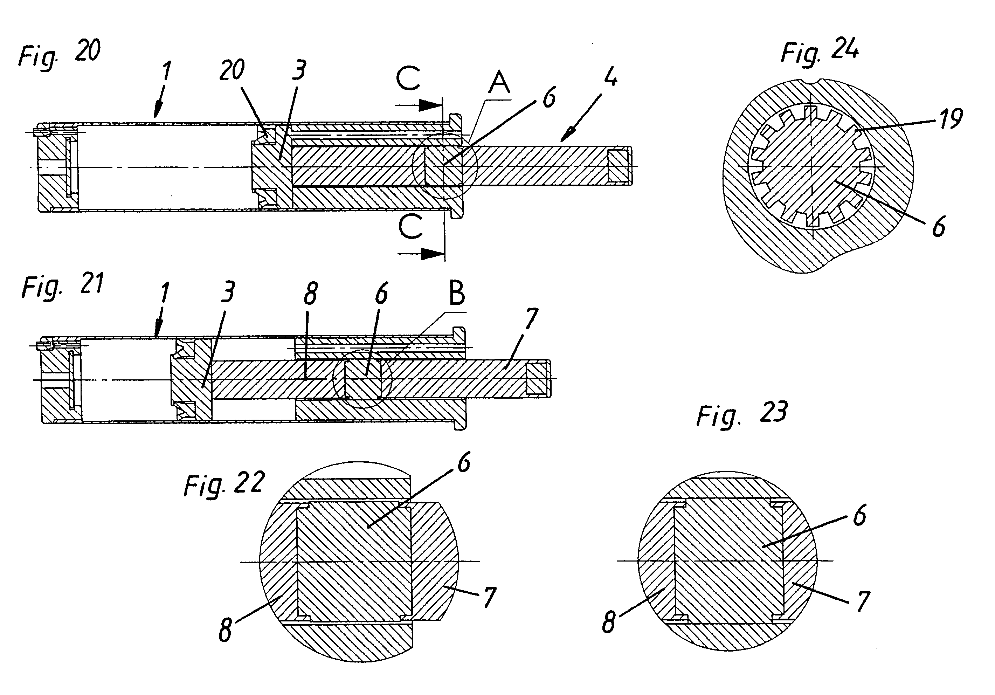

Im Ausführungsbeispiel nach den Fig. 20 bis 24 verlaufen die Rippen 19 in bezug auf die Kolbenstange 4 in axialer Richtung.

Anstelle von Rippen 19 können auch Noppen vorgesehen sein, die beispielsweise in Reihe angeordnet sind.

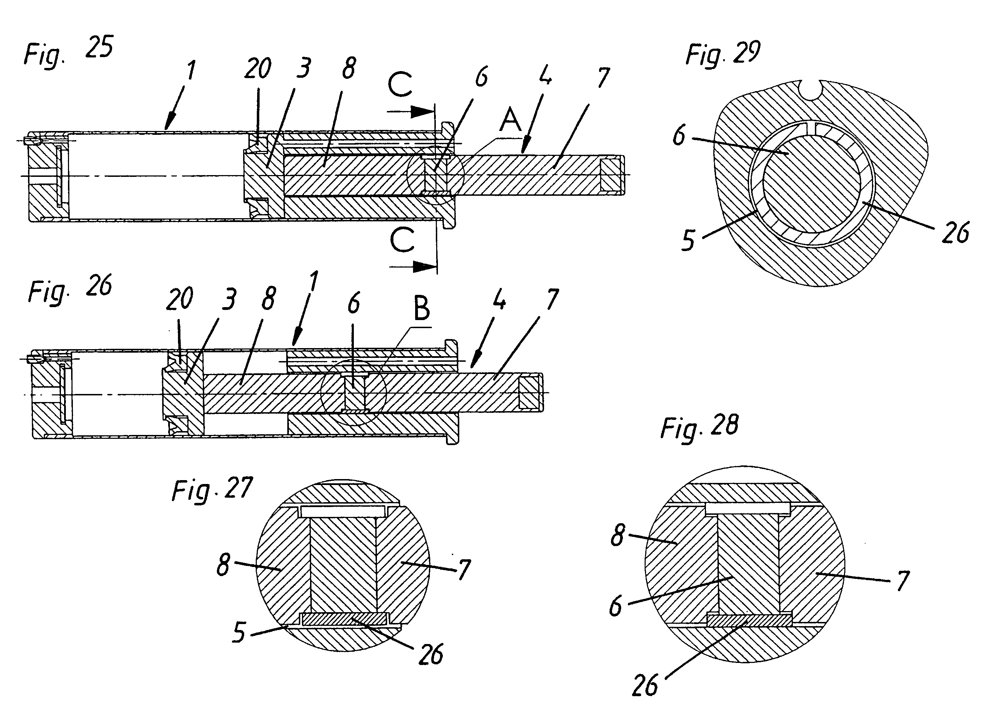

Im Ausführungsbeispiel nach den Fig. 25 bis 29 ist der elastisch verformbare Kolbenteil 6 von einem separaten Mantel 26 umgeben. Der Mantel 26 ist aus einem härteren und abriebfesteren Material als der elastisch verformbare Kolbenteil 6 gefertigt. Um trotzdem die radiale Ausdehnung des elastisch verformbaren Kolbenteils 6 nicht zu behindern, ist der Mantel 26 geschlitzt ausgeführt. Der Mantel 26 kann mit ausreichender Steifigkeit ausgeführt sein, um in axialer Richtung einen Begrenzungsanschlag für die zusammengedrückten Abschnitte 7, 8 der Kolbenstange 4 zu bilden. Der Schlitz des Mantels 26 ist vorzugsweise durchgehend ausgeführt.

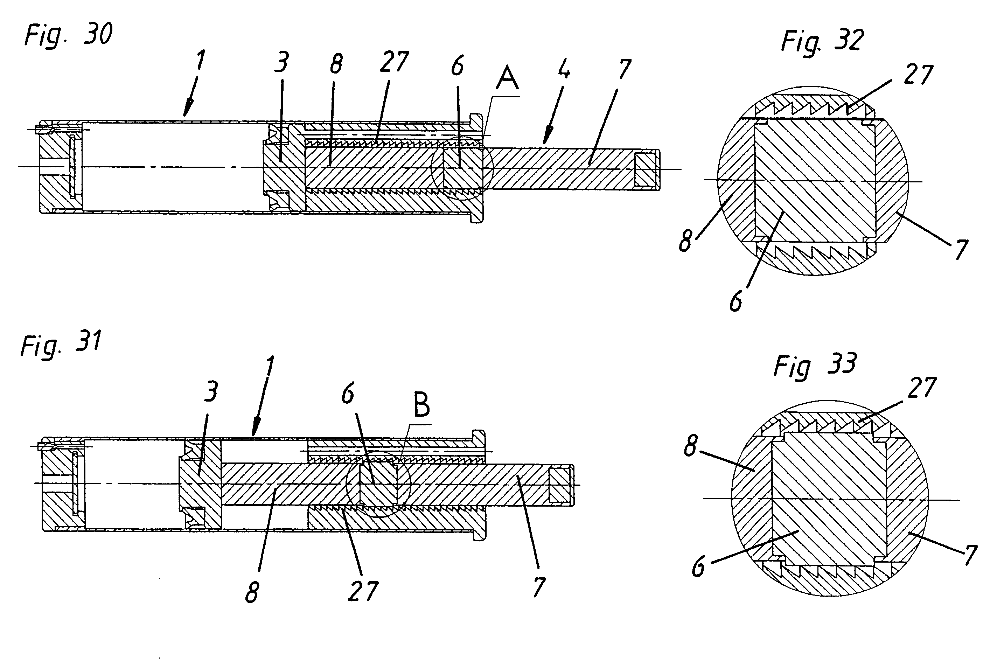

Im Ausführungsbeispiel nach den Fig. 30 bis 33 ist die Wand 9 des Kanals 5 mit ringförmigen Rippen 27 versehen. Werden die Abschnitte 7, 8 der Kolbenstange 4 zusammengepreßt und der elastisch verformbare Kolbenteil 6 gestaucht und an die Wand 9 des Kanals gedrückt, dann dringen die Rippen 27 in das elastische Material des Kolbenteils 6 ein und der Halt der Kolbenstange 4 wird vergrößert. Die Rippen 27 sind vorzugsweise sägezahnförmig ausgebildet.

In den Fig. 14, 18, 22 und 32 ist der elastische Kolbenteil 6 jeweils ohne Druckbelastung gezeigt. Die Fig. 15, 19, 23 und 33 zeigen den elastisch verformbaren Kolbenteil 6 während der Dämpfung.

Im Ausführungsbeispiel nach den Fig. 12 bis 33 ist der Zylinder 1 mit einem Flatterventil 28 und einem Durchlaßkanal 29 versehen. Am freien Ende der Kolbenstange 4 kann ein Magnet angeordnet sein, der es ermöglicht, den Kolben 3 nach erfolgter Dämpfung wiederum in die Bereitschaftsstellung zu ziehen.

## Patentansprüche

1. Dämpfer, insbesondere für Möbel, mit einem in einer Zylinderkammer eines Zylinders linear verschiebbaren Kolben, der mit einem elastisch verformbaren Kolbenteil versehen ist, der beim Dämpfvorgang an die Zylinderwand gedrückt wird, **dadurch gekennzeichnet, dass** der elastisch verformbare Kolbenteil (6) an einer am Kolben (3) ausgebildeten Kolbenstange (4) ausgebildet ist, die in einem Kanal (5) des Zylinders (1) geführt ist, der einen geringeren Durchmesser aufweist als der Kolben (3), wobei sich der elastisch verformbare Kolbenteil (6) unter axialer Druckbelastung radial ausweitet und an der Wand (9) des Kanals (5) anliegt.

2. Dämpfer nach Anspruch 1, **dadurch gekennzeichnet, dass** die Kolbenstange (4) und der elastisch verformbare Kolbenteil (6) im Kanal (5) mit Spiel geführt ist.

3. Dämpfer nach Anspruch 1 oder 2, **dadurch gekennzeichnet, dass** der elastisch verformbare Kolbenteil (6) zwischen zwei unverformbaren Abschnitten (7, 8) der Kolbenstange (4) angeordnet ist.

4. Dämpfer nach einem der Ansprüche 1 bis 3, **dadurch gekennzeichnet, dass** der elastisch verformbare Kolbenteil (6) als Vollkörper aus einem gummielastischen Material gefertigt ist.

5. Dämpfer nach einem der Ansprüche 1 bis 4, **dadurch gekennzeichnet, dass** die Kolbenstange (4) an ihrem freien Ende mit einer Abdeckkappe (12) versehen ist, die mindestens eine Luftdurchtrittsöffnung (13) aufweist.

6. Dämpfer nach einem der Ansprüche 1 bis 5, **dadurch gekennzeichnet, dass** der Kolben (3), der die Zylinderkammer (2) in zwei Teilkammern (2', 2") unterteilt, mit einer Düse (16) versehen ist, die die beiden Teilkammern (2', 2") verbindet.

7. Dämpfer nach einem der Ansprüche 1 bis 6, **dadurch gekennzeichnet, dass** sich im Zylinder (1) zwischen den Kolben (3) und dem elastisch verformbaren Kolbenteil (6) beim Dämpfungsvorgang ein Unterdruck bildet.

8. Dämpfer nach einem der Ansprüche 1 bis 7, **dadurch gekennzeichnet, daß** in der Zylinderwand mindestens eine axial verlaufende Vertiefung (18) vorgesehen ist.

9. Dämpfer nach Anspruch 7 oder 8, **gekennzeichnet durch** mindestens einen gesteuerten Überströmkanal (18, 22, 24, 25) zwischen zwei Kammern (2', 2", 2''') mit unterschiedlichem Druck, die sich beiderseits des Kolbens (3) befinden.

10. Dämpfer nach einem der Ansprüche 1 bis 9, mit einem Zylinder, in dem mindestens zwei Kolben verfahrbar sind, und mit einer Druckkammer und einer Unterdruckkammer, **dadurch gekennzeichnet, daß** zwischen den Kolben (30, 31) eine druckneutrale Kammer (2''') vorgesehen ist und sich zwischen der Druckkammer (21') und der druckneutralen Kammer (2''') mindestens ein gesteuerter Überströmkanal (22, 24, 25) befindet.

11. Dämpfer nach Anspruch 10, **dadurch gekennzeichnet, daß** die Druckkammer und die Unterdruckkammer baulich getrennt sind und unterschiedliche Durchmesser aufweisen.

12. Dämpfer nach Anspruch 11, **dadurch gekennzeichnet, daß** die Durchmesser des Zylinders und des Kolbens (31) der Unterdruckkammer größer sind als die Durchmesser des Zylinders und des Kolbens (30) der Druckkammer.

13. Dämpfer nach Anspruch 10 oder 11, **dadurch gekennzeichnet, daß** der elastisch verformbare Kolbenteil (6) an der dem Kolben (30) der Druckkammer (2') gegenüberliegenden Seite des Kolbens (31) der Unterdruckkammer (2") angeordnet ist.

14. Dämpfer nach einem der Ansprüche 1 bis 4, **dadurch gekennzeichnet, daß** der elastisch verformbare Kolbenteil (6), an seinem Mantel, mit einer unebenen Oberflächenstruktur versehen ist.

15. Dämpfer nach Anspruch 14, **dadurch gekennzeichnet, daß** der elastisch verformbare Kolbenteil (6) mit Rippen (19) versehen ist.

16. Dämpfer nach Anspruch 15, **dadurch gekennzeichnet, daß** die Rippen (19) in Umfangsrichtung verlaufen.

17. Dämpfer nach Anspruch 15 oder 16, **dadurch gekennzeichnet, daß** mindestens ein Teil der Rippen (19) mit dreieckigem Querschnitt ausgebildet ist.

18. Dämpfer nach einem der Ansprüche 15 oder 17, **dadurch gekennzeichnet, daß** die Rippen (19) am elastisch verformbaren Kolbenteil (6) in axialer Richtung verlaufen.

19. Dämpfer nach Anspruch 14, **dadurch gekennzeichnet, daß** der elastisch verformbare Kolbenteil (6) an seinem Mantel mit Noppen versehen ist.

20. Dämpfer nach einem der Ansprüche 1 bis 19, **dadurch gekennzeichnet, daß** der elastisch verformbare Kolbenteil (6) von einem separaten Mantel (26) umgeben ist.

21. Dämpfer nach Anspruch 20, **dadurch gekennzeichnet, daß** der Mantel (26) geschlitzt ausgeführt ist.

22. Dämpfer nach Anspruch 20 oder 21, **dadurch gekennzeichnet, daß** der Mantel (26) als Begrenzungsanschlag für die starren Abschnitte (7, 8) der Kolbenstange (4) dient.

23. Dämpfer nach einem der Ansprüche 20 bis 22, **dadurch gekennzeichnet, daß** der Mangel (26) aus einem härteren und abriebfesteren Materials als der elastisch verformbare Kolbenteil (6) gefertigt ist.

24. Dämpfer nach einem der Ansprüche 1 bis 23, **dadurch gekennzeichnet, daß** die Wand (9) des Kanals (5) mit Rippen (27) versehen ist.

25. Dämpfer nach Anspruch 24, **dadurch gekennzeichnet, daß** die Rippen (27) in Umfangsrichtung verlaufen.

26. Dämpfer nach Anspruch 25, **dadurch gekennzeichnet, daß** die Rippen (27) im Querschnitt sägezahnförmig ausgebildet sind.

## Claims

1. A damping device, in particular for furniture, having a piston which is linearly displaceable in a cylinder chamber of a cylinder and is provided with a resiliently deformable piston part which is pressed against the cylinder wall during the damping procedure, **characterised in that** the resiliently deformable piston part (6) is constructed on a piston rod (4), which is guided in a channel (5) of the cylinder (1) which has a smaller diameter than the piston (3), with the resiliently deformable piston part (6) widening radially under axial compressive load and abutting against the wall (9) of the channel (5).

2. A damping device according to claim 1, **characterised in that** the piston rod (4) and the resiliently deformable piston part (6) are guided in the channel (5) with clearance.

3. A damping device according to claim 1 or 2, **characterised in that** the resiliently deformable piston part (6) is arranged between two non-deformable portions (7, 8) of the piston rod (4).

4. A damping device according to one of the claims 1 to 3, **characterised in that** the resiliently deformable piston part (6) is made as a solid body from material with a rubber-like resilience.

5. A damping device according to one of the claims 1 to 4, **characterised in that** the piston rod (4) is provided at its free end with a covering cap (12) which has at least one air through opening (13).

6. A damping device according to one of the claims 1 to 5, **characterised in that** the piston (3), which divides the cylinder chamber (2) into two chamber parts (2', 2"), is provided with a nozzle (16) which connects the two chamber parts (2', 2").

7. A damping device according to one of the claims 1 to 6, **characterised in that** during the damping procedure a negative pressure is formed in the cylinder (1), between the piston (3) and the resiliently deformable piston part (6).

8. A damping device according to one of the claims 1 to 7, **characterised in that** at least one axially extending recess (18) is provided in the cylinder wall.

9. A damping device according to claim 7 or 8, **characterised by** at least one controlled overflow channel (18, 22, 24, 25) between two chambers (2', 2", 2''') at different pressures which are located on either side of the piston (3).

10. A damping device according to one of the claims 1 to 9 having a cylinder in which at least two pistons are movably disposed and having a pressurised chamber and a negative-pressure chamber, **characterised in that** between the pistons (30, 31) there is provided a chamber (2"') at neutral pressure, and at least one controlled overflow channel (22, 24, 25) is located between the pressurised chamber (21') and the chamber (2''') at neutral pressure.

11. A damping device according to claim 10, **characterised in that** the pressurised chamber and the negative-pressure chamber are structurally separated and have different diameters.

12. A damping device according to claim 11, **characterised in that** the diameters of the cylinder and the piston (31) of the negative-pressure chamber are larger than the diameters of the cylinder and the piston (30) of the pressurised chamber.

13. A damping device according to claim 10 or 11, **characterised in that** the resilient deformable piston part (6) is arranged on the opposite side of the piston (31) of the negative-pressure chamber (2") to that with the piston (30) of the pressurised chamber (2').

14. A damping device according to one of the claims 1 to 4, **characterised in that** the resilient deformable piston part (6) is provided with an uneven surface structure on its coat.

15. A damping device according to claim 14, **characterised in that** the resilient deformable piston part (6) is provided with ribs (19).

16. A damping device according to claim 15, **characterised in that** the ribs (19) are extending in circumferential direction.

17. A damping device according to claim 15 or 16, **characterised in that** at least a part of the ribs (19) have a triangular form.

18. A damping device according to claim 14, **characterised in that** the ribs (19) on the resilient deformable piston part (6) extend in axial direction.

19. A damping device according to claim 14, **characterised in that** the resilient deformable piston part (6) has knobs on its coat.

20. A damping device according to one of the claims 1 to 19, **characterised in that** the resilient deformable piston part (6) is surrounded by a separable coat (26).

21. A damping device according to claim 20, **characterised in that** the coat (26) is slitted.

22. A damping device according to claim 20 or 21, **characterised in that** the coat (26) is used as a stop for the movement of the non-deformable portions (7, 8) of the piston rod (4).

23. A damping device according to one of the claims 20 to 22, **characterised in that** the coat (26) is produced from a material which is harder and having a higher abrasion resistance than the resilient deformable piston part (6).

24. A damping device according to one of the claims 1 to 23, **characterised in that** the wall (9) of the channel (5) is provided with ribs (27).

25. A damping device according to claim 24, **characterised in that** the ribs (27) extend in circumferential direction.

26. A damping device according to claim 25, **characterised in that** the ribs (27) have a serrated form in cross section.

## Revendications

1. Amortisseur, en particulier pour mobilier, comportant un piston, mobile linéairement dans une chambre d'un vérin et muni d'une partie de piston élastiquement déformable, qui est poussée contre la paroi du vérin pendant le processus d'amortissement, **caractérisé en ce que** la partie de piston (6) élastiquement déformable est réalisée sur une tige de piston (4) formée contre le piston (3) et guidée dans un canal (5) du vérin (1), qui possède un diamètre inférieur à celui du piston (3), la partie de piston (6) élastiquement déformable s'élargissant radialement sous l'effet d'une sollicitation de pression axiale et prenant appui contre la paroi (9) du canal (5).

2. Amortisseur selon la revendication 1, **caractérisé en ce que** la tige de piston (4) et la partie de piston (6) élastiquement déformable sont guidées avec un jeu dans le canal (5).

3. Amortisseur selon la revendication 1 ou 2, **caractérisé en ce que** la partie de piston (6) élastiquement déformable est agencée entre deux parties (7, 8) non déformables de la tige de piston (4).

4. Amortisseur selon l'une quelconque des revendications 1 à 3, **caractérisé en ce que** la partie de piston (6) élastiquement déformable est réalisée sous forme de corps plein en matériau de type caoutchouc.

5. Amortisseur selon l'une quelconque des revendications 1 à 4, **caractérisé en ce que** la tige de piston (4), au niveau de son extrémité libre, est munie d'un capuchon de protection (12) qui comporte au moins un orifice de passage d'air (13).

6. Amortisseur selon l'une quelconque des revendications 1 à 5, **caractérisé en ce que** le piston (3), qui sépare la chambre de vérin (2) en deux chambres partielles (2', 2''), est muni d'une buse (16) par laquelle les deux chambres partielles (2', 2'') communiquent entre elles.

7. Amortisseur selon l'une quelconque des revendications 1 à 6, **caractérisé en ce que**, pendant le processus d'amortissement, il se forme une dépression dans le vérin (1) entre le piston (3) et la partie de piston (6) élastiquement déformable.

8. Amortisseur selon l'une quelconque des revendications 1 à 7, **caractérisé en ce qu'**il est prévu au moins un creux (18) orienté dans le sens axial dans la paroi du vérin.

9. Amortisseur selon la revendication 7 ou 8, **caractérisé par** au moins un canal de trop-plein (18, 22, 24, 25) piloté, situé entre deux chambres (2', 2'', 2''') à pression différente, qui sont situées de part et d'autre du piston (3).

10. Amortisseur selon l'une quelconque des revendications 1 à 9, comportant un vérin, dans lequel sont mobiles au moins deux pistons et comportant une chambre de pression et une chambre de dépression, **caractérisé en ce qu'**il est prévu une chambre à pression neutre (2''') entre les pistons (30, 31), et au moins un canal de trop-plein (22, 24, 25) piloté est disposé entre la chambre de pression (21') et la chambre à pression neutre (2''').

11. Amortisseur selon la revendication 10, **caractérisé en ce que** la chambre de pression et la chambre de dépression sont séparées sur le plan constructif et possèdent des diamètres différents.

12. Amortisseur selon la revendication 11, **caractérisé en ce que** les diamètres du vérin et du piston (31) dans la chambre de dépression sont supérieurs aux diamètres du vérin et du piston (30) dans la chambre de pression.

13. Amortisseur selon la revendication 10 ou 11, **caractérisé en ce que** la partie de piston (6) élastiquement déformable est agencée sur le côté, face au piston (30) de la chambre de pression (2'), du piston (31) de la chambre de dépression (2'').

14. Amortisseur selon l'une quelconque des revendications 1 à 4, **caractérisé en ce que** la partie de piston (6) élastiquement déformable comporte sur sa paroi latérale une structure de surface non plane.

15. Amortisseur selon la revendication 14, **caractérisé en ce que** la partie de piston (6) élastiquement déformable comporte des nervures (19).

16. Amortisseur selon la revendication 15, **caractérisé en ce que** les nervures (19) s'étendent dans le sens périphérique.

17. Amortisseur selon la revendication 15 ou 16, **caractérisé en ce qu'**au moins une partie des nervures (19) sont réalisées avec une section triangulaire.

18. Amortisseur selon la revendication 15 ou 17, **caractérisé en ce que** les nervures (19) s'étendent dans le sens axial contre la partie de piston (6) élastiquement déformable.

19. Amortisseur selon la revendication 14, **caractérisé en ce que** la partie de piston (6) élastiquement déformable comporte des picots sur sa paroi latérale.

20. Amortisseur selon l'une quelconque des revendications 1 à 19, **caractérisé en ce que** la partie de piston (6) élastiquement déformable est entourée par une paroi latérale (26) séparée.

21. Amortisseur selon la revendication 20, **caractérisé en ce que** la paroi latérale (26) est fendue.

22. Amortisseur selon la revendication 20 ou 21, **caractérisé en ce que** la paroi latérale (26) fait fonction de butée de délimitation pour les parties (7, 8) rigides de la tige de piston (4).

23. Amortisseur selon l'une quelconque des revendications 20 à 22, **caractérisé en ce que** la paroi latérale (26) est réalisée dans un matériau plus dur et plus résistant à l'usure que la partie de piston (6) élastiquement déformable.

24. Amortisseur selon l'une quelconque des revendications 1 à 23, **caractérisé en ce que** la paroi (9) du canal (5) comporte des nervures (27).

25. Amortisseur selon la revendication 24, **caractérisé en ce que** les nervures (27) s'étendent dans le sens périphérique.

26. Amortisseur selon la revendication 25, **caractérisé en ce que** les nervures (27) sont réalisées avec une section en dents de scie.
